(19) 
Europäisches
Patentamt

European
Patent Office

Office européen
des brevets

(11) **EP 4 386 672 A1**

(12) # DEMANDE DE BREVET EUROPEEN

(43) Date de publication:
**19.06.2024   Bulletin 2024/25**

(21) Numéro de dépôt: **23213874.3**

(22) Date de dépôt: **04.12.2023**

(51) Classification Internationale des Brevets (IPC):
***G06T 7/254*** *(2017.01)*

(52) Classification Coopérative des Brevets (CPC):
**G06T 7/254**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité:   **13.12.2022   FR 2213216**

(71) Demandeur: **STMicroelectronics International N.V.**
**1228 Plan-les-Ouates, Geneva (CH)**

(72) Inventeur: **NICOLAS, Marina**
**38340 VOREPPE (FR)**

(74) Mandataire: **Thibon, Laurent**
**Cabinet Beaumont**
**4, Place Robert Schuman**
**B.P. 1529**
**38025 Grenoble Cedex 1 (FR)**

(54) **PROCEDE D'ESTIMATION DE LA DIRECTION D'UN MOUVEMENT DANS DES IMAGES VIDEO**

(57)    La présente description concerne un procédé de détermination d'au moins un classificateur de mouvement global selon une première direction dans des images vidéo d'une scène, comprenant les étapes consistant à déterminer une image différentielle à partir de deux images vidéo ; sélectionner des pixels de l'image différentielle correspondant à des bords d'objets ; déterminer, pour chaque pixel sélectionné, au moins un classificateur de mouvement local selon la première direction au moins à une première ou deuxième valeur ; déterminer un premier indicateur de mouvement local selon la première direction qui dépend de la somme des classificateurs de mouvement local à la première valeur et un deuxième indicateur de mouvement local selon la première direction qui dépend de la somme des classificateurs de mouvement local à la deuxième valeur ; et déterminer le classificateur de mouvement global à partir de la comparaison des premier et deuxième indicateurs de mouvement local.

Fig 2

**EP 4 386 672 A1**

## Description

La présente demande de brevet revendique la priorité de la demande de brevet français FR22/13216 qui sera considérée comme faisant partie intégrante de la présente description.

## Domaine technique

La présente description concerne de façon générale un procédé d'estimation de la direction d'un mouvement dans des images vidéo.

## Technique antérieure

Pour certaines applications utilisant un capteur d'images fournissant des images vidéo d'une scène, il est souhaitable de disposer d'une estimation de la direction globale d'un mouvement dans les images fournies par le capteur d'images. Il peut s'agir de l'estimation de la direction de mouvements d'objets mobiles de la scène ou de l'estimation de la direction du mouvement du capteur d'images lorsque celui-ci est mobile par rapport à la scène. Un exemple d'application concerne le capteur d'images d'un casque de réalité virtuelle.

Il existe des procédés d'estimation de la direction globale d'un mouvement dans des images vidéo à partir de l'analyse des images fournies par le capteur d'images. Toutefois, de tels procédés nécessitent généralement le traitement de plusieurs images pour fonctionner correctement, ce qui implique le stockage d'informations d'images précédentes, alors que, pour certaines applications, il est souhaitable que l'estimation de la direction globale soit disponible avec un cout de mémoire minimal, rapidement après l'acquisition d'une nouvelle image vidéo, sans attendre une période de latence directement induite par le nombre d'images/seconde du système.

## Résumé de l'invention

Il existe un besoin de pallier tout ou partie des inconvénients des procédés d'estimation de la direction globale d'un mouvement dans des images vidéo connus.

Un mode de réalisation prévoit un procédé de détermination d'au moins un classificateur de mouvement global selon une première direction dans des images vidéo d'une scène, comprenant les étapes suivantes :

a) déterminer une image différentielle à partir de deux images vidéo ;
b) sélectionner des pixels de l'image différentielle correspondant à des bords d'objets de la scène ;
c) déterminer, pour chaque pixel sélectionné à l'étape b), au moins un classificateur de mouvement local selon la première direction au moins à une première valeur ou à une deuxième valeur ;

d) déterminer un premier indicateur de mouvement local selon la première direction qui dépend de la somme des classificateurs de mouvement local selon la première direction à la première valeur et un deuxième indicateur de mouvement local selon la première direction qui dépend de la somme des classificateurs de mouvement local selon la première direction à la deuxième valeur ; et
e) déterminer le classificateur de mouvement global selon la première direction à partir de la comparaison des premier et deuxième indicateurs de mouvement local selon la première direction.

Un mode de réalisation prévoit également un système de détermination d'au moins un classificateur de mouvement global selon une première direction dans des images vidéo d'une scène, comprenant un capteur d'images d'acquisition des images vidéo et un module de traitement configuré pour :

a) déterminer une image différentielle à partir de deux images vidéo ;
b) sélectionner des pixels de l'image différentielle correspondant à des bords d'objets de la scène ;
c) déterminer, pour chaque pixel sélectionné à l'étape b), au moins un classificateur de mouvement local selon la première direction au moins à une première valeur ou à une deuxième valeur ;
d) déterminer un premier indicateur de mouvement local selon la première direction qui dépend de la somme des classificateurs de mouvement local selon la première direction à la première valeur et un deuxième indicateur de mouvement local selon la première direction qui dépend de la somme des classificateurs de mouvement local selon la première direction à la deuxième valeur ; et
e) déterminer le classificateur de mouvement global selon la première direction à partir de la comparaison des premier et deuxième indicateurs de mouvement local selon la première direction.

Selon un mode de réalisation, à l'étape a), chaque pixel de l'image différentielle est une fonction affine de la différence entre les pixels à la même position dans les deux images vidéo.

Selon un mode de réalisation, l'étape a) comprend, en outre, une étape de segmentation de l'image différentielle pour délimiter au moins deux portions de l'image différentielle, les étapes b), c), d), et e) étant mises en oeuvre séparément pour chaque portion de l'image différentielle.

Selon un mode de réalisation, l'étape b) comprend une première sélection de pixels de l'image différentielle pour lesquels la valeur absolue de la différence entre le pixel et une constante est supérieure à un premier seuil de valeur de pixel.

Selon un mode de réalisation, l'étape b) comprend une deuxième sélection de pixels de l'image différentielle parmi les pixels de la première sélection comprenant la sélection, pour chaque groupe de pixels jointifs selon la première direction, seulement du pixel au début du groupe et du pixel à la fin du groupe.

Selon un mode de réalisation, l'étape b) comprend le retrait de la première sélection de chaque groupe de pixels jointifs selon la première direction pour lequel le nombre de pixels est inférieur à un seuil de nombre de pixels.

Selon un mode de réalisation, l'étape c) comprend, pour chaque pixel de l'image différentielle sélectionné à l'étape b), la détermination du classificateur de mouvement local selon la première direction du pixel sélectionné au moins à la première valeur ou à la deuxième valeur à partir de la valeur du pixel sélectionné et du résultat de la comparaison entre un premier pixel égal au pixel de la première ou deuxième image vidéo situé selon la première direction juste avant le pixel sélectionné ou un premier niveau de bruit égal au niveau de bruit de pixels de l'image différentielle situés selon la première direction juste avant le pixel sélectionné et un deuxième pixel égal au pixel de la première ou deuxième image vidéo situé selon la première direction juste après le pixel sélectionné ou un deuxième niveau de bruit égal au niveau de bruit de pixels de l'image différentielle situés selon la première direction juste après le pixel sélectionné.

Selon un mode de réalisation, pour chaque pixel de l'image différentielle sélectionné à l'étape b), l'étape c) comprend :

- dans le cas où le pixel sélectionné est inférieur à un deuxième seuil de valeur de pixel et dans le cas où le premier pixel est inférieur strictement au deuxième pixel ou le premier niveau de bruit est inférieur strictement au deuxième niveau de bruit, le classificateur de mouvement local selon la première direction du pixel sélectionné est mis à la première valeur ;
- dans le cas où le pixel sélectionné est supérieur au deuxième seuil de valeur de pixel et dans le cas où le premier pixel est inférieur strictement au deuxième pixel ou le premier niveau de bruit est inférieur strictement au deuxième niveau de bruit, le classificateur de mouvement local selon la première direction du pixel sélectionné est mis à la deuxième valeur ;
- dans le cas où le pixel sélectionné est inférieur au deuxième seuil de valeur de pixel et dans le cas où le premier pixel est supérieur strictement au deuxième pixel ou le premier niveau de bruit est supérieur strictement au deuxième niveau de bruit, le classificateur de mouvement local selon la première direction du pixel sélectionné est mis à la deuxième valeur ; et
- dans le cas où le pixel sélectionné est supérieur au deuxième seuil de valeur de pixel et dans le cas où le premier pixel est supérieur strictement au deuxième pixel ou le premier niveau de bruit est supérieur strictement au deuxième niveau de bruit, le classificateur de mouvement local selon la première direction du pixel sélectionné est mis à la première valeur.

Selon un mode de réalisation, le premier niveau de bruit est égal à l'écart-type des valeurs d'un nombre K de pixels de l'image différentielle jointifs selon la première direction situés juste avant le pixel sélectionné et le deuxième niveau de bruit est égal à l'écart-type des valeurs d'un nombre K de pixels de l'image différentielle jointifs selon la première direction situés juste après le pixel sélectionné.

Selon un mode de réalisation, le premier niveau de bruit et/ou le deuxième niveau de bruit sont remplacés par une valeur maximale de niveau de bruit dans le cas où les K pixels sont supérieurs à un troisième seuil de valeur de pixel.

Selon un mode de réalisation, le procédé ou le système comprend en outre :

à l'étape c), déterminer, pour chaque pixel de l'image différentielle sélectionné à l'étape b), au moins un classificateur de mouvement local selon une deuxième direction, différente de la première direction, au moins à une troisième valeur ou à une quatrième valeur ;
à l'étape d), déterminer un premier indicateur de mouvement local selon la deuxième direction qui dépend de la somme des classificateurs de mouvement local selon la deuxième direction à la troisième valeur et un deuxième indicateur de mouvement local selon la deuxième direction qui dépend de la somme des classificateurs de mouvement local selon la deuxième direction à la quatrième valeur ; et à l'étape e), déterminer un classificateur de mouvement global selon la deuxième direction à partir de la comparaison des premier et deuxième indicateurs de mouvement local selon la deuxième direction.

Selon un mode de réalisation, à l'étape d), pour chaque pixel de chaque groupe de pixels sélectionnés à l'étape b) et alignés selon une troisième direction inclinée à 10 ° prés selon l'une des bissectrices par rapport aux première et deuxième directions, lorsque le classificateur de mouvement local selon la première direction du pixel du groupe est à la première valeur et le classificateur de mouvement local selon la deuxième direction du pixel du groupe est à la quatrième valeur, le classificateur de mouvement local selon la première direction du pixel du groupe est pondéré par un facteur strictement inférieur à l'unité dans la détermination du premier indicateur de mouvement local selon la première direction et le classificateur de mouvement local selon la deuxième direction du pixel du groupe est pondéré par ledit facteur dans la détermination du premier indicateur de mouvement local selon la deuxième direction, et, lorsque le classificateur de mouvement local selon la première direction du pixel du groupe est à la deuxième valeur et le classificateur de mouvement local selon la deuxième direction du pixel du groupe est à la quatrième valeur, le classificateur de mouvement local selon la première direction du pixel est pondéré par ledit facteur dans la détermination du deuxième indicateur de mouvement local selon la première direction et le classificateur de mouvement local selon la deuxième direction du pixel du groupe est pondéré par ledit facteur dans la détermination du deuxième indicateur de mouvement local selon la deuxième direction.

Selon un mode de réalisation, les pixels des images vidéo et de l'image différentielle sont agencés en rangées et en colonnes, la première direction correspondant à la direction des rangées et la deuxième direction correspondant à la direction des colonnes.

Selon un mode de réalisation, le système comprend un dispositif d'illumination de la scène par un rayonnement, le capteur d'images étant configuré pour acquérir des images vidéo de la scène en captant ledit rayonnement.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente un schéma d'un système d'acquisition d'images vidéo ;

la figure 2 est un schéma par blocs d'un mode de réalisation d'un procédé d'estimation de la direction de mouvement global dans des images vidéo ;

la figure 3 est une image vidéo d'une scène ;

la figure 4 est une image différentielle de la scène représentée en figure 3 ;

la figure 5 illustre la sélection d'objets dans l'image différentielle de la figure 4 ;

la figure 6 est un schéma par blocs d'un mode de réalisation d'une étape du procédé illustré en figure 2 ;

la figure 7 est une image très schématique illustrant des classificateurs de mouvement local déterminés au cours de la mise en oeuvre du procédé illustré en figure 2 ;

la figure 8 illustre des classificateurs de mouvement local déterminés à partir de l'image différentielle de la figure 4 ;

la figure 9 est une image vidéo d'une autre scène ;

la figure 10 est une image différentielle de la scène représentée en figure 9 ;

la figure 11 illustre des classificateurs de mouvement local déterminés à partir de l'image différentielle de la figure 10 ;

la figure 12 est une image vidéo d'une autre scène ;

la figure 13 est une image différentielle de la scène représentée en figure 12 ;

la figure 14 illustre des classificateurs de mouvement local de ligne déterminés à partir de l'image différentielle de la figure 13 ;

la figure 15 illustre des classificateurs de mouvement local de colonne déterminés à partir de l'image différentielle de la figure 13 ;

la figure 16 est une image vidéo d'une autre scène ;

la figure 17 illustre des classificateurs de mouvement local de ligne déterminés à partir d'une image différentielle de la scène de la figure 16 ;

la figure 18 est une figure analogue à la figure 17 après la mise en oeuvre d'une étape de correction ;

la figure 19 est une image vidéo d'une autre scène ;

la figure 20 illustre des classificateurs de mouvement local de ligne déterminés à partir d'une image différentielle de la scène de la figure 19 ;

la figure 21 est une figure analogue à la figure 20 après la mise en oeuvre d'une étape de correction ;

la figure 22 représente des courbes d'évolution d'un indicateur de mouvement local de ligne indiquant un mouvement vers la droite et un mouvement vers la gauche pour une séquence d'images vidéo ;

la figure 23 représente des courbes d'évolution d'un indicateur de mouvement local de colonne indiquant un mouvement vers le bas et un mouvement vers le haut pour la même séquence d'images vidéo ;

la figure 24 représente une courbe d'évolution du classificateur de mouvement global de ligne pour la même séquence d'images vidéo ;

la figure 25 représente une courbe d'évolution du classificateur de mouvement global de colonne pour la même séquence d'images vidéo ; et

la figure 26 représente, de façon partielle et schématique, un mode de réalisation d'un module de traitement du système de la figure 1.

## Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à une image dans une position normale d'observation.

Sauf précision contraire, les expressions "environ", "approximativement", "sensiblement", et "de l'ordre de" signifient à 10 % près, de préférence à 5 % près.

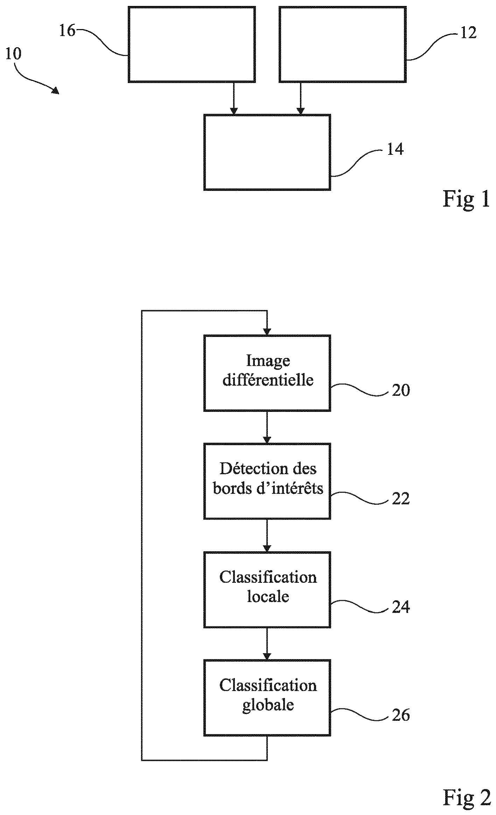

La figure 1 est un schéma d'un système 10 d'acquisition d'images vidéo configuré pour la mise en oeuvre d'un procédé d'estimation de la direction d'un mouvement dans les images vidéo.

Le système 10 comprend :

- un capteur d'images 12 configuré pour faire l'acquisition d'images vidéo d'une scène ; et
- un module de traitement 14 configuré pour recevoir les images vidéo successives fournies par le capteur d'images 12 et pour mettre en oeuvre un procédé d'estimation de la direction d'un mouvement global dans les images vidéo reçues.

Le système 10 peut en outre comprendre un dispositif 16 d'illumination de la scène. A titre d'exemple, le dispositif 16 d'illumination de la scène est configuré pour émettre un rayonnement, par exemple un rayonnement infrarouge, illuminant la scène et le capteur d'images 12 est configuré pour faire l'acquisition d'images vidéo de la scène, les photodétecteurs du capteur d'images 12 étant configurés pour capter le rayonnement émis par le dispositif d'illumination 16, le capteur d'images 12 étant par exemple configuré pour acquérir des images infrarouges de la scène.

Un pixel d'une image vidéo correspond à l'élément unitaire de l'image vidéo acquise par le capteur d'images 12. Lorsque le capteur d'images 12 est un capteur d'images couleur, il comprend en général pour l'acquisition de chaque pixel de l'image au moins trois photodétecteurs qui captent chacun un rayonnement lumineux sensiblement dans une seule couleur (par exemple, le rouge, le vert et le bleu). Chaque photodétecteur fournit un signal électrique analogique représentatif de l'intensité lumineuse captée qui est ensuite converti en signal numérique. On appelle pixel le signal numérique obtenu pour une seule couleur du pixel de l'image. Lorsque le capteur d'images 12 est un capteur d'images monochromes, il comprend en général un seul photodétecteur pour l'acquisition de chaque pixel de l'image.

Une image vidéo comprend un ensemble de N rangées et M colonnes de pixels, où N et M sont des nombres entiers, par exemple variant de 480*640 à 1920* 2560 pour les résolutions les plus couramment utilisées. Dans la suite de la description, on considère une image monochrome, à titre d'exemple en niveau de gris, chaque pixel pouvant prendre une valeur variant d'une valeur minimale MIN, par exemple 0, à une valeur maximale MAX. A titre d'exemple, lorsque le pixel est codé sur 8 bits, chaque pixel peut prendre 256 valeurs. A titre d'exemple, la valeur minimale MIN correspond à l'absence de rayonnement capté par le photodétecteur, c'est-à-dire à un pixel noir, et la valeur maximale MAX correspond à une saturation du photodétecteur capteur d'images, c'est-à-dire à un pixel blanc.

La figure 2 est un schéma par blocs d'un mode de réalisation d'un procédé de fourniture d'au moins un classificateur de la direction d'un mouvement global dans des images vidéo mis en oeuvre par le module de traitement 14 du système 10 de la figure 1.

Dans la suite de la description, on considère un mouvement selon la direction des lignes de l'image vers la dernière colonne de l'image, appelé mouvement vers la droite par la suite, un mouvement selon la direction des lignes de l'image vers la première colonne de l'image, appelé mouvement vers la gauche par la suite, un mouvement selon la direction des colonnes de l'image vers la première ligne de l'image, appelé mouvement vers le haut par la suite, et un mouvement selon la direction des colonnes de l'image vers la dernière ligne de l'image, appelé mouvement vers le bas par la suite.

Le procédé comprend des étapes 20, 22, 24, et 26. La succession des étapes 20, 22, 24, et 26 est répétée au fur et à mesure de la réception, par le module de traitement 14, d'images vidéo acquises par le capteur d'images 12.

L'étape 20 comprend la détermination d'une image différentielle signée Idiff à partir de deux images vidéo successives Im2 et Im1 fournies par le capteur d'images 12, l'image Im2 étant acquise par le capteur d'images 12 après l'image Im1.

L'étape 22 comprend la détection de bords d'intérêt dans l'image différentielle Idiff, un bord d'intérêt correspondant à un bord d'un objet de la scène qui s'est déplacé entre l'image Im1 et l'image Im2.

L'étape 24 comprend, pour chaque pixel du bord d'intérêt détecté à l'étape 22, la détermination d'un classificateur de direction de mouvement local du pixel du bord d'intérêt.

L'étape 26 comprend la détermination d'un classificateur de la direction de mouvement global dans les images vidéo à partir des classificateurs de direction de mouvement local déterminés à l'étape 24.

Selon un mode de réalisation, les étapes 20, 22, 24, et 26 sont successives, l'étape 22 étant mise en oeuvre après la détermination de la totalité de l'image différentielle Idiff à l'étape 20, et l'étape 24 étant mise en oeuvre après la détermination de la totalité des bords d'intérêt dans l'image différentielle Idiff à l'étape 22. Selon un mode de réalisation, les étapes 20, 22, 24, et 26 sont mises en oeuvre successivement pour chaque ligne de l'image différentielle dès que cette ligne de l'image différentielle est déterminée et avant que la totalité de l'image différentielle Idiff ne soit déterminée. Selon un mode de réalisation, les étapes 20, 22, 24, et 26 sont mises en oeuvre successivement pour chaque colonne de l'image différentielle dès que cette colonne de l'image différentielle est déterminée et avant que la totalité de l'image différentielle Idiff ne soit déterminée.

Selon un mode de réalisation, à l'étape 20, chaque pixel $Pdiff_{i,j}$ à la ligne i et la colonne j de l'image différentielle Idiff, i étant un nombre entier variant de 1 à N et j étant un nombre entier variant de 1 à M, est une fonction affine de la différence entre le pixel $P2_{i,j}$ à la ligne i et la colonne j de l'image Im2 et le pixel $P1_{i,j}$ à la ligne i et la colonne j de l'image Im1, les coefficients de la fonction affine étant sélectionnés pour que la valeur obtenue varie de la valeur minimale MIN à la valeur maximale MAX.

Selon un mode de réalisation, chaque pixel $Pdiff_{i,j}$ est déterminée selon la relation suivante :

[Math 1]

$$Pdiff_{i,j} = MOY + \frac{P2_{i,j} - P1_{i,j}}{2}$$

où MOY est égal à (MAX-MIN)/2.

Dans la suite de la description, un pixel d'une image vidéo ou d'une image différentielle est dit clair lorsqu'il est supérieur strictement à MOY et est dit sombre lorsqu'il est inférieur strictement à MOY. Sur l'image différentielle Idiff, un pixel $Pdiff_{i,j}$ qui est clair signifie que le pixel $P2_{i,j}$ de l'image Im2 est plus clair que le pixel $P1_{i,j}$ de l'image Im1 et un pixel $Pdiff_{i,j}$ qui est sombre signifie que le pixel $P2_{i,j}$ de l'image Im2 est plus sombre que le pixel $P1_{i,j}$ de l'image Im1.

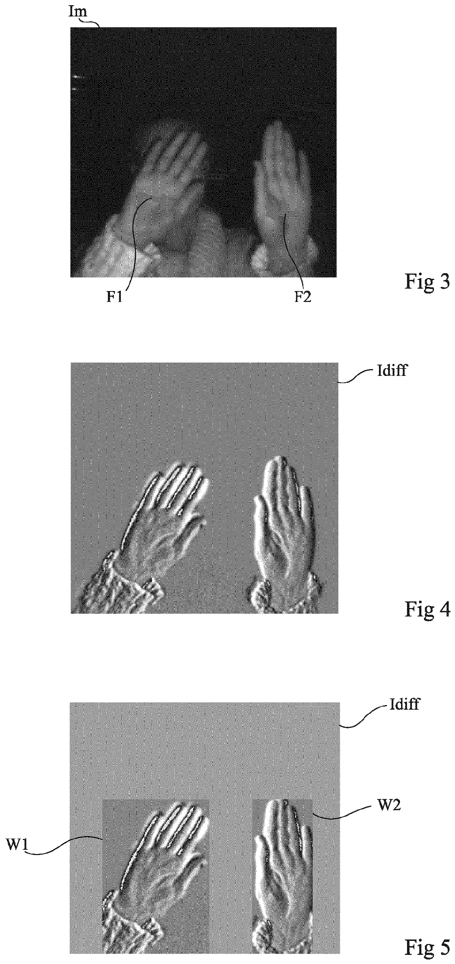

La figure 3 est une image vidéo Im en nuances de gris d'une scène acquise par le capteur d'images 12. La scène représente les mains d'une personne en premier plan avec un arrière-plan sombre. Pour cette scène, le capteur d'images 12 est fixe par rapport à la scène et les mains de la personne sont mobiles par rapport au capteur d'images 12. En figure 3, on a indiqué par deux flèches F1 et F2 les mouvements des mains de la personne.

La figure 4 est une image différentielle Idiff obtenue à partir de l'acquisition de deux images vidéo successives de la scène représentée sur la figure 3, l'une de ces images étant la figure 3. Comme cela apparaît de façon nette sur la figure 4 pour la main située à droite, les pixels du bord gauche de la main sont clairs et les pixels du bord droit de la main sont sombres, ce qui traduit bien un mouvement vers la gauche.

L'étape 20 peut en outre comprendre une étape de segmentation de l'image différentielle Idiff visant à extraire de l'image différentielle Idiff des groupes de pixels appartenant à des objets distincts. L'étape de segmentation peut conduire à la détermination de sous-images différentielles distinctes extraites de l'image différentielle, chaque sous-image différentielle comprenant un ensemble de N' rangées et M' colonnes de pixels, où N' est un nombre entier strictement inférieur à N et M' est un nombre entier strictement inférieur à M. L'étape de segmentation peut de façon avantageuse être mise en oeuvre pour une application dans laquelle il est supposée que la scène comprend des objets mobiles et distincts, chaque sous-image différentielle correspond à un objet. L'étape de segmentation peut mettre en oeuvre un procédé de segmentation fondée sur les régions (en anglais region-based segmentation), un procédé de segmentation fondée sur les contours (en anglais edge-based segmentation), et/ou la segmentation fondée sur la classification ou le seuillage des pixels en fonction de leur intensité (en anglais : classification ou thresholding). A titre de variante, l'étape de segmentation peut être réalisée à l'étape 22 en parallèle de l'étape de détection des bords d'intérêt.

La figure 5 représente l'image différentielle Idiff de la figure 4 après la mise en oeuvre d'une étape de segmentation sur laquelle sont délimitées deux sous-images W1 et W2 qui correspondent aux mains de la personne présente sur la scène.

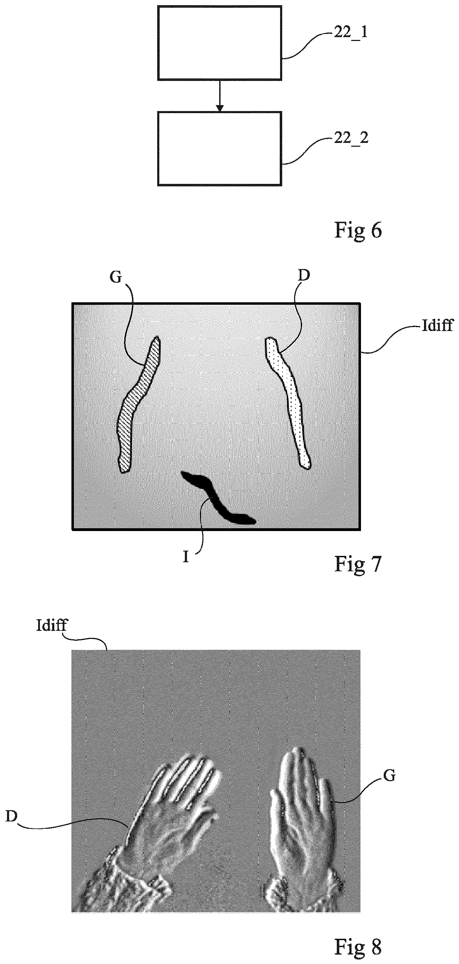

La figure 6 est un schéma par blocs d'un mode de réalisation de l'étape 22 du procédé illustré en figure 2.

L'étape 22 comprend des étapes 22_1 et 22_2 successives.

A l'étape 22_1, une première sélection de pixels de l'image différentielle est réalisée. Selon un mode de réalisation, pour chaque ligne i de l'image différentielle, et pour chaque pixel $Pdiff_{i,j}$ de l'image différentielle avec j variant de 1 à M, la valeur absolue de la différence entre le pixel $Pdiff_{i,j}$ et MOY est comparée à un seuil de valeur de pixel TH_Pdiff. Si valeur absolue de la différence entre le pixel $Pdiff_{i,j}$ et MOY est supérieure à TH_Pdiff, le pixel $Pdiff_{i,j}$ est sélectionné dans la première sélection. A cette étape, pour chaque ligne de l'image différentielle, lorsqu'il y a des pixels sélectionnés, les pixels sélectionnés peuvent former un groupe, deux groupes, ou plus de deux groupes, chaque groupe comprenant plusieurs pixels successifs.

A l'étape 22_1, une deuxième sélection de pixels de l'image différentielle est réalisée. Selon un mode de réalisation, pour chaque colonne j de l'image différentielle, et pour chaque pixel $Pdiff_{i,j}$ de l'image différentielle avec i variant de 1 à M, la valeur absolue de la différence entre le pixel Pdiff$_{i,j}$ et MOY est comparée au seuil de valeur de pixel. Si la valeur absolue de la différence entre le pixel Pdiff$_{i,j}$ et MOY est supérieure à TH_Pdiff, le pixel Pdiff$_{i,j}$ est sélectionné dans la deuxième sélection. A cette étape, pour chaque colonne de l'image différentielle, lorsqu'il y a des pixels sélectionnés, les pixels sélectionnés forment un groupe, deux groupes, ou plus de deux groupes, chaque groupe comprenant plusieurs pixels successifs.

Le seuil TH_Pdiff est choisi entre les valeurs MIN et MAX. Le seuil TH_Pdiff dépend notamment de l'application envisagée du système 10. Pour une application dans laquelle il est supposé que l'arrière-plan de la scène correspond essentiellement à des pixels noirs sur les images acquises par le capteur d'images 12, le seuil TH_Pdiff peut être bas. Une telle application correspond par exemple au cas où la scène comprend au premier plan des objets mobiles par rapport au capteur d'images 12. Dans ce cas, chaque groupe de pixels de la première ou deuxième sélection correspond à un objet mobile. A titre d'exemple, le seuil TH_Pdiff varie alors de 3 à 10, et est par exemple égal à 5. Pour une application dans laquelle il ne peut pas être supposé que l'arrière-plan de la scène correspond essentiellement à des pixels noirs sur les images acquises par le capteur d'images 12, le seuil TH_Pdiff peut être plus élevé. Une telle application correspond par exemple au cas où le capteur d'images 12 est mobile et la scène comprend essentiellement des objets fixes. A titre d'exemple, le seuil TH_Pdiff varie alors de 5 à 15, et est par exemple égal à 10. Le seuil TH_Pdiff peut être fourni au système 10 par un utilisateur.

A l'étape 22_2, une troisième sélection de pixels de l'image différentielle est réalisée parmi les pixels de la première sélection et une quatrième sélection de pixels de l'image différentielle est réalisée parmi les pixels de la deuxième sélection.

Selon un mode de réalisation, à l'étape 22_2, pour chaque ligne i de l'image différentielle Idiff, et pour chaque groupe de pixels de la première sélection, la troisième sélection consiste à ne conserver que le premier pixel du groupe et le dernier pixel du groupe. Selon un mode de réalisation, cette étape est mise en oeuvre seulement dans les applications où les éléments en premier plan sont relativement distincts de l'arrière-plan de la scène. Ceci peut correspondre à des cas où la caméra est fixe. Pour les applications où la caméra se « promène » dans la scène, cette étape peut ne pas être mise en oeuvre, les différents objets de la scène ayant tendance à se couvrir en partie par exemple. Selon un mode de réalisation, à l'étape 22_2, pour chaque ligne i de l'image différentielle, et pour chaque groupe de pixels de la première sélection, la troisième sélection consiste à ne pas conserver le groupe lorsque le nombre de pixels du groupe est inférieur à un seuil de nombre de pixels TH_NB. Ceci permet d'écarter les objets trop fins de la sélection ou des détections qui seraient davantage liées au bruit qu'à la présence d'un réel objet.

Selon un mode de réalisation, à l'étape 22_2, pour chaque colonne j de l'image différentielle, et pour chaque groupe de pixels de la deuxième sélection, la quatrième sélection consiste à ne conserver que le premier pixel du groupe et le dernier pixel du groupe. Selon un mode de réalisation, à l'étape 22_2, pour chaque colonne j de l'image différentielle, et pour chaque groupe de pixels de la deuxième sélection, la quatrième sélection consiste à ne pas conserver le groupe lorsque le nombre de pixels du groupe est inférieur au seuil TH_NB. Ceci permet d'écarter les objets fins de la sélection ou des détections qui seraient davantage liées au bruit qu'à la présence d'un réel objet.

Pour chaque ligne i et pour chaque colonne j de l'image différentielle, chaque pixel Pdiff$_{i,j}$ de l'image différentielle conservé après la troisième sélection ou la quatrième sélection est appelé pixel de bord d'intérêt Pint$_{i,j}$ par la suite.

Selon un mode de réalisation, le seuil TH_NB utilisé à l'étape 22_2 varie de 3 pixels à 15 pixels et est par exemple égal à 10 pixels. Le seuil TH_NB dépend notamment de l'application envisagée du système 10 et de la résolution du capteur. Le seuil TH_NB peut être fourni au système 10 par un utilisateur.

Selon un mode de réalisation, lorsqu'une étape de segmentation de l'image différentielle a été mise en oeuvre, chaque étape 22_1 et 22_2 décrite précédemment peut n'être mise en oeuvre que pour les sous-images déterminées à l'étape de segmentation.

Selon un mode de réalisation, à l'étape 24, pour chaque ligne de l'image différentielle et pour chaque pixel de bord d'intérêt, un classificateur de mouvement local de ligne est attribué au pixel de bord d'intérêt. Le classificateur de mouvement local de ligne peut prendre une valeur parmi trois valeurs possibles, dont l'une indique un mouvement vers la gauche, une autre indique un mouvement vers la droite, et encore une autre indique une indétermination.

Selon un mode de réalisation, à l'étape 24, pour chaque colonne de l'image différentielle et pour chaque pixel de bord d'intérêt, un classificateur de mouvement local de colonne est attribué au pixel de bord d'intérêt. Le classificateur de mouvement local de colonne peut prendre une valeur parmi trois valeurs possibles, dont l'une indique un mouvement vers le haut, une autre indique un mouvement vers le bas, et encore une autre indique une indétermination

La figure 7 représente de façon très schématique une image différentielle Idiff sur laquelle, pour chaque pixel de bord d'intérêt déterminé à l'étape 24, est indiqué le classificateur de mouvement local de ligne attribué au pixel de bord d'intérêt. A titre d'exemple, en figure 7, on a représenté une zone G de pixels de bords d'intérêt pour lesquels le classificateur de mouvement local de ligne est à la valeur indiquant un mouvement vers la gauche, une zone D de pixels de bords d'intérêt pour lesquels le classificateur de mouvement local de ligne est à la valeur indiquant un mouvement vers la droite, et une zone I de pixels de bords d'intérêt pour lesquels le classificateur de mouvement local de ligne est à la valeur indiquant une indétermination.

L'étape 24 comprend, pour chaque ligne i et pour chaque pixel de bord d'intérêt $Pint_{i,j}$, la comparaison du pixel $P2_{i,j-1}$ de l'image Im2 situé sur la ligne i juste à gauche du pixel de bord d'intérêt $Pint_{i,j}$ et le pixel $P2_{i,j+1}$ de l'image Im2 situé sur la ligne i juste à droite du pixel de bord d'intérêt $Pint_{i,j}$ en tenant compte de la valeur du pixel de bord d'intérêt $Pint_{i,j}$. A titre de variante, au lieu d'utiliser le pixel $P2_{i,j-1}$ de l'image Im2 situé sur la ligne i juste à gauche du pixel de bord d'intérêt $Pint_{i,j}$, il peut être utilisé la moyenne d'un nombre réduit de pixels adjacents situés sur la ligne i juste à gauche du pixel de bord d'intérêt $Pint_{i,j}$, par exemple 3 ou 4 pixels, le nombre réduit étant inférieur strictement au nombre K de pixels décrit par la suite. De façon analogue, au lieu d'utiliser le pixel $P2_{i,j+1}$ de l'image Im2 situé sur la ligne i juste à droite du pixel de bord d'intérêt $Pint_{i,j}$, il peut être utilisé la moyenne d'un nombre réduit de pixels adjacents situés sur la ligne i juste à droite du pixel de bord d'intérêt $Pint_{i,j}$, par exemple 3 ou 4 pixels, le nombre réduit étant inférieur strictement au nombre K de pixels décrit par la suite.

Selon un mode de réalisation :

- dans le cas où le pixel $P2_{i,j-1}$ est inférieur strictement au pixel $P2_{i,j+1}$ et que le pixel de bord d'intérêt $Pint_{i,j}$ est sombre, le classificateur de mouvement local de ligne du pixel de bord d'intérêt $Pint_{i,j}$ est mis à la valeur indiquant un mouvement vers la droite ;
- dans le cas où le pixel $P2_{i,j-1}$ est inférieur strictement au pixel $P2_{i,j+1}$ et que le pixel de bord d'intérêt $Pint_{i,j}$ est clair, le classificateur de mouvement local de ligne du pixel de bord d'intérêt $Pint_{i,j}$ est mis à la valeur indiquant un mouvement vers la gauche ;
- dans le cas où le pixel $P2_{i,j-1}$ est supérieur strictement au pixel $P2_{i,j+1}$ et que le pixel de bord d'intérêt $Pint_{i,j}$ est sombre, le classificateur de mouvement local de ligne du pixel de bord d'intérêt $Pint_{i,j}$ est mis à la valeur indiquant un mouvement vers la gauche ; et
- dans le cas où le pixel $P2_{i,j-1}$ est supérieur strictement au pixel $P2_{i,j+1}$ et que le pixel de bord d'intérêt $Pint_{i,j}$ est clair, le classificateur de mouvement local de ligne du pixel de bord d'intérêt $Pint_{i,j}$ est mis à la valeur indiquant un mouvement vers la droite.

L'étape 24 comprend, pour chaque colonne j et pour chaque pixel de bord d'intérêt $Pint_{i,j}$, la comparaison du pixel $P2_{i-1,j}$ de l'image Im2 situé à la colonne j juste au-dessus du pixel de bord d'intérêt $Pint_{i,j}$ et le pixel $P2_{i+1,j}$ de l'image Im2 situé à la colonne j juste au-dessous du pixel de bord d'intérêt $Pint_{i,j}$ en tenant compte de la valeur du pixel de bord d'intérêt $Pint_{i,j}$. A titre de variante, au lieu d'utiliser le pixel $P2_{i-1,j}$ de l'image Im2 situé sur la colonne j juste au-dessus du pixel de bord d'intérêt $Pint_{i,j}$, il peut être utilisé la moyenne d'un nombre réduit de pixels situés sur la colonne j adjacents juste au-dessus du pixel de bord d'intérêt $Pint_{i,j}$, par exemple 3 ou 4 pixels, le nombre réduit étant inférieur strictement au nombre K de pixels décrit par la suite. De façon analogue, au lieu d'utiliser le pixel $P2_{i+1,j}$ de l'image Im2 situé sur la colonne j juste au-dessous du pixel de bord d'intérêt $Pint_{i,j}$, il peut être utilisé la moyenne d'un nombre réduit de pixels adjacents situés sur la colonne j juste au-dessous du pixel de bord d'intérêt $Pint_{i,j}$, par exemple 3 ou 4 pixels, le nombre réduit étant inférieur strictement au nombre K de pixels décrit par la suite.

Selon un mode de réalisation :

- dans le cas où le pixel $P2_{i-1,j}$ est inférieur strictement au pixel $P2_{i+1,j}$ et que le pixel de bord d'intérêt $Pint_{i,j}$ est sombre, le classificateur de mouvement local de colonne du pixel de bord d'intérêt $Pint_{i,j}$ est mis à la valeur indiquant un mouvement vers le bas ;
- dans le cas où le pixel $P2_{i-1,j}$ est inférieur strictement au pixel $P2_{i+1,j}$ et que le pixel de bord d'intérêt $Pint_{i,j}$ est clair, le classificateur de mouvement local de ligne du pixel de bord d'intérêt $Pint_{i,j}$ est mis à la valeur indiquant un mouvement vers le haut ;
- dans le cas où le pixel $P2_{i-1,j}$ est supérieur strictement au pixel $P2_{i+1,j}$ et que le pixel de bord d'intérêt $Pint_{i,j}$ est sombre, le classificateur de mouvement local de ligne du pixel de bord d'intérêt $Pint_{i,j}$ est mis à la valeur indiquant un mouvement vers le haut ; et
- dans le cas où le pixel $P2_{i-1,j}$ est supérieur strictement au pixel $P2_{i+1,j}$ et que le pixel de bord d'intérêt $Pint_{i,j}$ est clair, le classificateur de mouvement local de ligne du pixel de bord d'intérêt $Pint_{i,j}$ est mis à la valeur indiquant un mouvement vers le bas.

Selon un autre mode de réalisation, à l'étape 24, pour chaque ligne i et pour chaque pixel de bord d'intérêt $Pint_{i,j}$, la détermination du classificateur de mouvement local de ligne du pixel de bord d'intérêt $Pint_{i,j}$ est mise en oeuvre sans requérir les valeurs des pixels $P2_{i,j-1}$ et $P2_{i,j+1}$ et/ou, pour chaque colonne j et pour chaque pixel de bord d'intérêt $Pint_{i,j}$, la détermination du classificateur de mouvement local de colonne du pixel de bord d'intérêt $Pint_{i,j}$ est mise en oeuvre sans requérir les valeurs des pixels $P2_{i-1,j}$ et $P2_{i+1,j}$.

Selon un mode de réalisation, seule l'image différentielle est utilisée pour déterminer si les pixels de l'images différentielle voisins d'un pixel de bord d'intérêt $Pint_{i,j}$ sont plus sombres ou plus clairs que le pixel de bord d'intérêt $Pint_{i,j}$. Ceci se base sur le fait que le signal électrique analogique fourni par chaque photodétecteur du capteur d'images 12 est sensiblement proportionnel au nombre de photons reçus par le photodétecteur tandis que le niveau de bruit associé à ce signal électrique est sensiblement proportionnel à la racine carrée du nombre de photons reçus par le photodétecteur. Comme chaque pixel $Pdiff_{i,j}$ de l'image différentielle est obtenu à partir de la différence entre le pixel $P2_{i,j}$ de l'image Im2 et le pixel $P1_{i,j}$ de l'image Im1, cette différence tend vers zéro pour chaque pixel de l'image différentielle lorsque la valeur des pixels P2$_{i,j}$ et P1$_{i,j}$ n'a sensiblement pas variée entre les images Im2 et Im1, notamment lorsqu'il s'agit d'un pixel correspondant à l'arrière-plan de la scène. Au contraire, le niveau de bruit associé au pixel Pdiff$_{i,j}$ de l'image différentielle correspond à la somme du niveau de bruit du pixel P2$_{i,j}$ et du niveau de bruit du pixel P1$_{i,j}$. De ce fait, pour un pixel ne variant sensiblement pas sur l'image Im1 et l'image Im2, notamment un pixel restant à l'arrière-plan de la scène sur l'image Im1 et l'image Im2, le niveau de bruit du pixel Pdiff$_{i,j}$ de l'image différentielle est d'autant plus faible que les pixels P2$_{i,j}$ et P1$_{i,j}$ sont sombres.

Selon un mode de réalisation, pour chaque pixel de bord d'intérêt Pint$_{i,j}$ de l'image différentielle, un niveau de bruit de ligne à gauche σG$_{i,j}$ est estimé sur un nombre K de pixels de la ligne i de l'image différentielle situés avant le pixel de bord d'intérêt Pint$_{i,j}$, et un niveau de bruit de ligne à droite σD$_{i,j}$ est estimé sur un nombre K de pixels de la ligne i de l'image différentielle situés après le pixel de bord d'intérêt Pint$_{i,j}$. On compare alors le niveau de bruit de ligne à gauche σG$_{i,j}$ et le niveau de bruit de ligne à droite σD$_{i,j}$. Lorsque deux pixels de bord d'intérêt Pint$_{i,j}$ sont séparés de moins de K pixels, il est considéré que la détermination du niveau de bruit de ligne entre les deux pixels de bord d'intérêt Pint$_{i,j}$ n'est pas possible et le classificateur de mouvement local de ligne de chacun de ces deux pixels de bord d'intérêt Pint$_{i,j}$ est mis à la valeur indiquant une indétermination. A titre d'exemple, le nombre K varie de 5 à 15, et est par exemple égal à 8.

Selon un mode de réalisation, le niveau de bruit est égal à l'écart-type des K valeurs des pixels considérés de l'image différentielle, c'est-à-dire égal à la racine carrée de la différence entre la moyenne des carrés des K valeurs des pixels considérés de l'image différentielle et le carré de la moyenne des K valeurs des pixels considérés de l'image différentielle.

Selon un mode de réalisation :

- dans le cas où le niveau de bruit de ligne à gauche σG$_{i,j}$ est inférieur strictement au niveau de bruit de ligne à droite σD$_{i,j}$ et que le pixel de bord d'intérêt Pint$_{i,j}$ est sombre, le classificateur de mouvement local de ligne du pixel de bord d'intérêt Pint$_{i,j}$ est mis à la valeur indiquant un mouvement vers la droite ;
- dans le cas où le niveau de bruit de ligne à gauche σG$_{i,j}$ est inférieur strictement au niveau de bruit de ligne à droite σD$_{i,j}$ et que le pixel de bord d'intérêt Pint$_{i,j}$ est clair, le classificateur de mouvement local de ligne du pixel de bord d'intérêt Pint$_{i,j}$ est mis à la valeur indiquant un mouvement vers la gauche ;
- dans le cas où le niveau de bruit de ligne à gauche σG$_{i,j}$ est supérieur strictement au niveau de bruit de ligne à droite σD$_{i,j}$ et que le pixel de bord d'intérêt Pint$_{i,j}$ est sombre, le classificateur de mouvement local de ligne du pixel de bord d'intérêt Pint$_{i,j}$ est mis à la valeur indiquant un mouvement vers la gauche ; et

- dans le cas où le niveau de bruit de ligne à gauche σG$_{i,j}$ est supérieur strictement au niveau de bruit de ligne à droite σD$_{i,j}$ et que le pixel de bord d'intérêt Pint$_{i,j}$ est clair, le classificateur de mouvement local de ligne du pixel de bord d'intérêt Pint$_{i,j}$ est mis à la valeur indiquant un mouvement vers la droite.

Selon un mode de réalisation, pour chaque pixel de bord d'intérêt Pint$_{i,j}$ de l'image différentielle, un niveau de bruit de colonne supérieur σH$_{i,j}$ est estimé sur un nombre K de pixels de la colonne j de l'image différentielle situés au-dessus du pixel de bord d'intérêt Pint$_{i,j}$, et un niveau de bruit de colonne inférieur σB$_{i,j}$ est estimé sur un nombre K de pixels de la colonne j de l'image différentielle situés au-dessous du pixel de bord d'intérêt Pint$_{i,j}$. On compare alors le niveau de bruit de colonne supérieur σH$_{i,j}$ et le niveau de bruit de colonne inférieur σB$_{i,j}$. Lorsque deux pixels de bord d'intérêt Pint$_{i,j}$ sont séparés de moins de K pixels, il est considéré que la détermination du niveau de bruit de colonne entre les deux pixels de bord d'intérêt Pint$_{i,j}$ n'est pas possible et le classificateur de mouvement local de colonne du chacun de ces deux pixels de bord d'intérêt Pint$_{i,j}$ est mis à la valeur indiquant une indétermination.

Selon un mode de réalisation :

- dans le cas où le niveau de bruit de colonne supérieur σH$_{i,j}$ est inférieur strictement au niveau de bruit de colonne inférieur σB$_{i,j}$ et que le pixel de bord d'intérêt Pint$_{i,j}$ est sombre, le classificateur de mouvement local de colonne du pixel de bord d'intérêt Pint$_{i,j}$ est mis à la valeur indiquant un mouvement vers le bas ;
- dans le cas où le niveau de bruit de colonne supérieur σH$_{i,j}$ est inférieur strictement au niveau de bruit de colonne inférieur σB$_{i,j}$ et que le pixel de bord d'intérêt Pint$_{i,j}$ est clair, le classificateur de mouvement local de ligne du pixel de bord d'intérêt Pint$_{i,j}$ est mis à la valeur indiquant un mouvement vers le haut ;
- dans le cas où le niveau de bruit de colonne supérieur σH$_{i,j}$ est supérieur strictement au niveau de bruit de colonne inférieur σB$_{i,j}$ et que le pixel de bord d'intérêt Pint$_{i,j}$ est sombre, le classificateur de mouvement local de ligne du pixel de bord d'intérêt Pint$_{i,j}$ est mis à la valeur indiquant un mouvement vers le haut ; et
- dans le cas où le niveau de bruit de colonne supérieur σH$_{i,j}$ est supérieur strictement au niveau de bruit de colonne inférieur σB$_{i,j}$ et que le pixel de bord d'intérêt Pint$_{i,j}$ est clair, le classificateur de mouvement local de ligne du pixel de bord d'intérêt Pint$_{i,j}$ est mis à la valeur indiquant un mouvement vers le bas.

Selon un mode de réalisation, l'estimation du bruit peut ne pas être déterminée pour les pixels de l'image différentielle de l'arrière-plan de la scène et il peut être supposé que les pixels de l'arrière-plan sont toujours sombres. Ceci peut notamment être le cas pour une application dans laquelle le capteur d'images 12 est fixe et la scène comprend des objets mobiles au premier plan.

L'estimation du niveau de bruit peut être incorrecte lorsque les pixels des images vidéo Im1 et Im2 sont saturés. En effet, dans ce cas, comme les K pixels utilisés pour déterminer le niveau de bruit de ligne ou de colonne sont tous ou très majoritairement à la valeur MAX, le niveau de bruit de ligne ou de colonne ainsi déterminé comme cela a été décrit précédemment a une valeur faible, ce qui est incorrect. Selon un mode de réalisation, une correction est mise en oeuvre lorsque le niveau de bruit de ligne ou de colonne estimé est faible alors que les pixels des images Im1 et Im2 utilisés pour déterminer ce niveau de bruit sont saturés. Dans ce cas, le niveau de bruit de ligne ou de colonne est mis à une valeur maximale, par exemple égale à 255 si le niveau est exprimé sur 8 bits. Cette correction peut se faire sans accéder aux valeurs des pixels des images Im1 et Im2 dans la mesure où un niveau de bruit anormalement bas (à zéro ou proche de zéro) indique une très grande probabilité de saturation.

Selon un mode de réalisation, lorsque le nombre de classificateurs de mouvement local de ligne ou de colonne qui ne sont pas à la valeur indiquant une indétermination est réduit, ceci peut signifier que le seuil de nombre de pixel TH_NB utilisé à l'étape 22 est trop élevé entraînant le rejet de bords d'intérêt qui pourraient participer à l'estimation du mouvement. Selon un mode de réalisation, une correction est mise en oeuvre lorsque le nombre de classificateurs de mouvement local de ligne ou de colonne qui ne sont pas à la valeur indiquant une indétermination est inférieur à un seuil. Dans ce cas, le seuil de nombre de pixel TH_NB utilisé à l'étape 22 est augmenté et les étapes 22 et 24 sont réalisées à nouveau.

L'étape 26 comprend la détermination d'un classificateur de direction de mouvement global dans les images vidéo à partir des classificateur de mouvement local de ligne et des classificateur de mouvement local de colonne déterminés à l'étape 24 qui ont des valeurs différentes de la valeur indiquant une indétermination. Selon un mode de réalisation, lorsqu'une étape de segmentation de l'image différentielle a été mise en oeuvre, l'étape 26 peut être réalisée séparément pour chaque sous-image déterminée à l'étape de segmentation et un classificateur de direction de mouvement global peut être déterminée pour chaque sous-image déterminée à l'étape de segmentation.

Selon un mode de réalisation, il est déterminé :

- un indicateur de mouvement vers la gauche qui correspond au nombre de pixels de bord d'intérêt $Pint_{i,j}$ pour lesquels le classificateur de mouvement local de ligne a la valeur indiquant un mouvement vers la gauche ;
- un indicateur de mouvement vers la droite qui correspond au nombre de pixels de bord d'intérêt $Pint_{i,j}$ pour lesquels le classificateur de mouvement local de ligne a la valeur indiquant un mouvement vers la droite ;
- un indicateur de mouvement vers le haut qui correspond au nombre de pixels de bord d'intérêt $Pint_{i,j}$ pour lesquels le classificateur de mouvement local de colonne a la valeur indiquant un mouvement vers le haut ; et
- un indicateur de mouvement vers le bas qui correspond au nombre de pixels de bord d'intérêt $Pint_{i,j}$ pour lesquels le classificateur de mouvement local de colonne a la valeur indiquant un mouvement vers le bas.

L'étape 26 comprend en outre une comparaison de l'indicateur de mouvement vers la gauche et l'indicateur de mouvement vers la droite pour déterminer le classificateur de mouvement global de ligne, et une comparaison entre l'indicateur de mouvement vers le haut et l'indicateur de mouvement vers le bas pour déterminer le classificateur de mouvement global de colonne. Selon un mode de réalisation, lorsque l'indicateur de mouvement vers la droite est supérieur à l'indicateur de mouvement vers la gauche, le classificateur de mouvement global de ligne est mis à une valeur indiquant un mouvement global de ligne vers la droite et lorsque l'indicateur de mouvement vers la droite est inférieur à l'indicateur de mouvement vers la gauche, le classificateur de mouvement global de ligne est mis à une valeur indiquant un mouvement global de ligne vers la gauche. Selon un mode de réalisation, lorsque l'indicateur de mouvement vers le haut est supérieur à l'indicateur de mouvement vers le bas, le classificateur de mouvement global de colonne est mis à une valeur indiquant un mouvement global de ligne vers le haut et lorsque l'indicateur de mouvement vers le haut est inférieur à l'indicateur de mouvement vers le bas, le classificateur de mouvement global de colonne est mis à une valeur indiquant un mouvement global de ligne vers le bas.

Pour un objet ayant un bord qui apparaît comme un bord incliné à 45 ° sur les images vidéo acquises par le capteur d'images 12, une difficulté provient du fait qu'il peut ne pas être possible de distinguer un mouvement vers la droite d'un mouvement vers le bas. De même, pour un objet ayant un bord qui apparaît comme un bord incliné à 135 ° sur les images vidéo acquises par le capteur d'images 12, une difficulté provient du fait qu'il peut ne pas être possible de distinguer un mouvement vers la gauche d'un mouvement vers le bas. Selon un mode de réalisation, l'étape 26 comprend la détection du fait que le pixel de bord d'intérêt $Pint_{i,j}$ appartient à un bord incliné d'un objet. Si le pixel de bord d'intérêt $Pint_{i,j}$ appartient à un bord incliné et que le classificateur de mouvement local de ligne de ce pixel de bord d'intérêt $Pint_{i,j}$ indique un mouvement vers la gauche et que le classificateur de mouvement local de colonne de ce pixel de bord d'intérêt $Pint_{i,j}$ indique un mouvement vers le bas, alors un facteur 1/2 est appliqué au classificateur de mouvement local de ligne de ce pixel de bord d'intérêt $Pint_{i,j}$

lors de la détermination de l'indicateur de mouvement vers la gauche et un facteur 1/2 est appliqué au classificateur de mouvement local de colonne de ce pixel de bord d'intérêt $Pint_{i,j}$ lors de la détermination de l'indicateur de mouvement vers le bas. Si le bord d'intérêt appartient à un bord incliné et que le classificateur de mouvement local de ligne de ce pixel de bord d'intérêt $Pint_{i,j}$ indique un mouvement vers la droite et que le classificateur de mouvement local de colonne de ce pixel de bord d'intérêt $Pint_{i,j}$ indique un mouvement vers le bas, alors un facteur 1/2 est appliqué au classificateur de mouvement local de ligne de ce pixel de bord d'intérêt $Pint_{i,j}$ lors de la détermination de l'indicateur de mouvement vers la droite et un facteur 1/2 est appliqué au classificateur de mouvement local de colonne de ce pixel de bord d'intérêt $Pint_{i,j}$ lors de la détermination de l'indicateur de mouvement vers le bas.

Selon un mode de réalisation, le classificateur de mouvement global de ligne et/ou de colonne est déterminé à partir d'une seule image différentielle. Cela permet de façon avantageuse la détermination du classificateur de mouvement global de ligne et/ou de colonne avec une latence réduite, par exemple à la fréquence de fourniture des images différentielles.

Selon un mode de réalisation, le classificateur de mouvement global de ligne et/ou de colonne est déterminé à partir d'un nombre de calculs réduit. Ceci permet la mise en oeuvre du procédé d'estimation de la direction d'un mouvement dans des images vidéo par un circuit électronique à faible coût de fabrication.

Selon un mode de réalisation, le classificateur de mouvement global de ligne et/ou de colonne est déterminé sans nécessiter d'avoir accès directement aux valeurs des pixels des images vidéo utilisées pour déterminer l'image différentielle. Ceci permet de façon avantageuse de pouvoir s'affranchir du stockage des images vidéo dans une mémoire, notamment lorsque l'image différentielle est déterminée de façon analogique à partir de la différence de deux intégrations successives réalisées par chaque photodétecteur du capteur d'images 12.

Des essais ont été réalisés. Pour ces essais, le dispositif 16 d'illumination de la scène est configuré pour émettre un rayonnement infrarouge illuminant la scène et le capteur d'images 12 est configuré pour faire l'acquisition d'images vidéo infrarouges de la scène à une fréquence de 186 images par seconde. Pour chaque essai, on a notamment représenté sur des figures une image vidéo en nuances de gris de la scène, une image différentielle obtenue à partir de l'acquisition de deux images vidéo successives de la scène, une image différentielle pour laquelle chaque pixel d'un bord d'intérêt de l'image différentielle est remplacé par un pixel de couleur dont la couleur dépend de la valeur du classificateur de mouvement local de ligne du pixel déterminé à l'étape 24 du procédé décrit précédemment attribué au pixel ou du classificateur de mouvement local de colonne déterminé à l'étape 24 du procédé décrit précédemment attribué au pixel.

En particulier, chaque zone D ou B en bleu correspond à des pixels d'un bord d'intérêt pour lesquels le classificateur de mouvement local de ligne indique un mouvement vers la droite (zone D) ou le classificateur de mouvement local de colonne indique un mouvement vers le bas (zone B), chaque zone G ou H en rose correspond à des pixels d'un bord d'intérêt pour lesquels le classificateur de mouvement local de ligne indique un mouvement vers la gauche (zone G) ou le classificateur de mouvement local de colonne indique un mouvement vers le haut (zone H), et chaque zone I en vert correspond à des pixels d'un bord d'intérêt pour lesquels le classificateur de mouvement local de ligne ou le classificateur de mouvement local de colonne indique une indétermination. Les classificateurs de mouvement local de ligne et de colonne ont été déterminés pour tous les essais en mettant en oeuvre le mode de réalisation décrit précédemment utilisant des estimations de niveaux de bruit de ligne et de colonne.

Les images représentées sur la figure 3, la figure 4, la figure 5, décrites précédemment, et la figure 8 ont été obtenues lors d'un premier essai.

La figure 8 représente l'image différentielle Idiff de la figure 4 sur laquelle sont en outre représentées, les zones D de pixels de bords d'intérêt pour lesquels le classificateur de mouvement local de ligne indique un mouvement vers la droite et les zones G de pixels de bords d'intérêt pour lesquels le classificateur de mouvement local de ligne indique un mouvement vers la gauche. Pour la main située à gauche, l'indicateur de mouvement vers la gauche est égal à 103 et l'indicateur de mouvement vers la droite est égal à 144, ce qui traduit le mouvement de cette main vers la droite. Pour la main située à droite, l'indicateur de mouvement vers la gauche est égal à 162 et l'indicateur de mouvement vers la droite est égal à 79, ce qui traduit le mouvement de cette main vers la gauche.

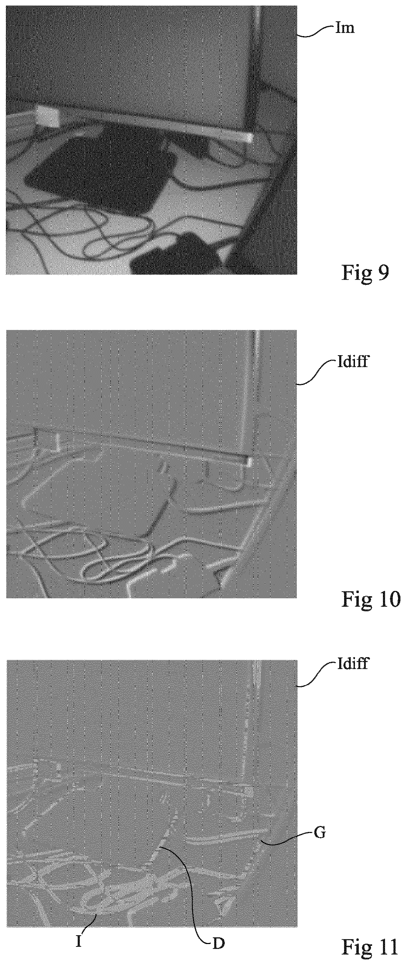

Les images représentées sur la figure 9, la figure 10, et la figure 11 ont été obtenues lors d'un deuxième essai.

La figure 9 est une image vidéo Im en nuances de gris d'une scène acquise par le capteur d'images 12. Les éléments de la scène sont immobiles et le capteur d'images 12 est mobile par rapport à la scène.

La figure 10 est une image différentielle Idiff obtenue à partir de l'acquisition de deux images vidéo successives de la scène représentée sur la figure 9.

La figure 11 représente l'image différentielle Idiff de la figure 10 sur laquelle sont en outre représentées les zones D de pixels de bords d'intérêt pour lesquels le classificateur de mouvement local de ligne indique un mouvement vers la droite, les zones G de pixels bords d'intérêt pour lesquels le classificateur de mouvement local de ligne indique un mouvement vers la gauche, et les zones I de pixels de bords d'intérêt pour lesquels le classificateur de mouvement local de ligne indique une indétermination. L'indicateur de mouvement vers la gauche est égal à 1785 et l'indicateur de mouvement vers la droite est égal à 3292, ce qui correspond à un mouvement global du capteur d'images 12 vers la droite.

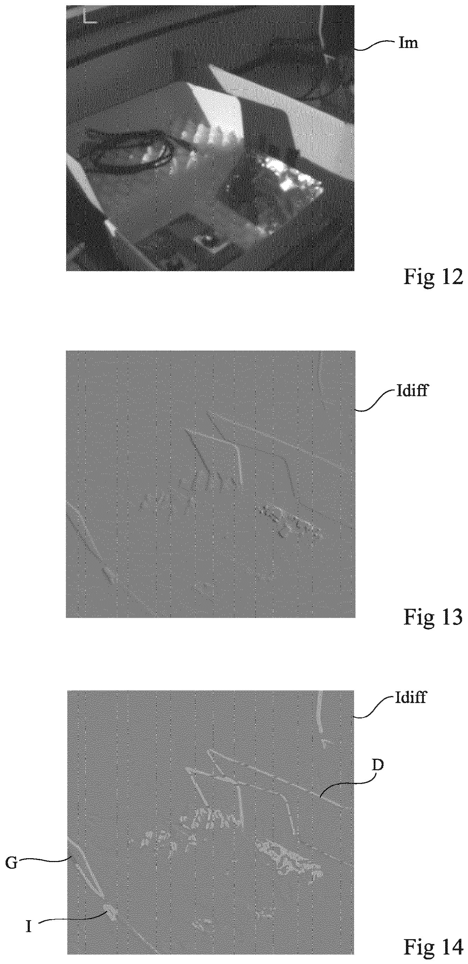

Les images représentées sur la figure 12, la figure 13, la figure 14, et la figure 15 ont été obtenues lors d'un troisième essai.

La figure 12 est une image vidéo Im en nuances de gris d'une scène acquise par le capteur d'images 12. Les éléments de la scène sont immobiles et le capteur d'images 12 est mobile par rapport à la scène.

La figure 13 est une image différentielle Idiff obtenue à partir de l'acquisition de deux images vidéo successives de la scène représentée sur la figure 12.

La figure 14 représente l'image différentielle Idiff de la figure 13 sur laquelle sont en outre représentées les zones D de pixels de bords d'intérêt pour lesquels le classificateur de mouvement local de ligne indique un mouvement vers la droite, les zones G de pixels de bords d'intérêt pour lesquels le classificateur de mouvement local de ligne indique un mouvement vers la gauche, et les zones I de pixels de bords d'intérêt pour lesquels le classificateur de mouvement local de ligne indique une indétermination. L'indicateur de mouvement vers la gauche est égal à 772 et l'indicateur de mouvement vers la droite est égal à 5279.

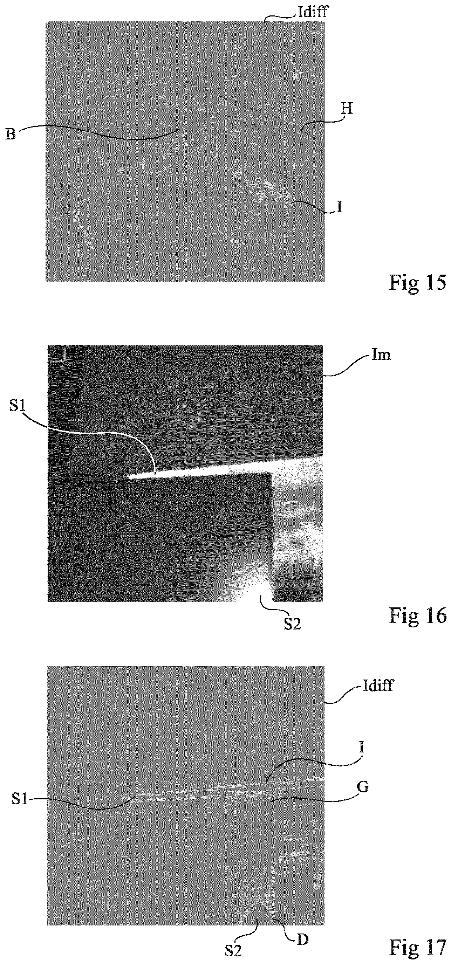

La figure 15 représente l'image différentielle Idiff de la figure 13 sur laquelle sont en outre représentées les zones H de pixels de bords d'intérêt pour lesquels le classificateur de mouvement local de colonne indique un mouvement vers le haut, les zones B de pixels de bords d'intérêt pour lesquels le classificateur de mouvement local de colonne indique un mouvement vers le bas, et les zones I de pixels de bords d'intérêt pour lesquels le classificateur de mouvement local de colonne indique une indétermination. L'indicateur de mouvement vers le haut est égal à 5381 et l'indicateur de mouvement vers le bas est égal à 1871.

Les images représentées sur la figure 16, la figure 17, et la figure 18 ont été obtenues lors d'un quatrième essai.

La figure 16 est une image vidéo en nuances de gris d'une scène acquise par le capteur d'images 12. Les éléments de la scène sont immobiles et le capteur d'images 12 est mobile par rapport à la scène. Comme cela apparaît sur cette image, les pixels sont saturés au moins aux zones S1 et S2.

La figure 17 représente l'image différentielle Idiff de la figure 16 sur laquelle sont en outre représentées les zones D de pixels de bords d'intérêt pour lesquels le classificateur de mouvement local de ligne indique un mouvement vers la droite, les zones G de pixels de bords d'intérêt pour lesquels le classificateur de mouvement local de ligne indique un mouvement vers la gauche, et les zones I de pixels de bords d'intérêt pour lesquels le classificateur de mouvement local de ligne indique une indétermination. Les classificateurs de mouvement local de ligne au voisinage des zones S1 et S2 sont incorrects.

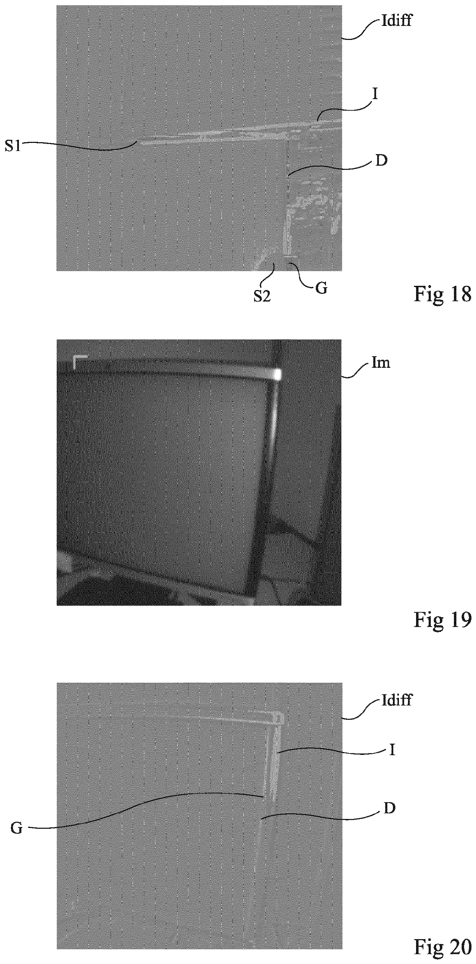

La figure 18 est une figure analogue à la figure 17 obtenue après mise en oeuvre de la correction décrite précédemment lorsque le niveau de bruit de ligne ou de colonne estimé est faible alors que les pixels des images Im1 et Im2 utilisés pour déterminer ce niveau de bruit sont saturés. Dans ce cas, le niveau de de bruit de ligne ou de colonne est mis à une valeur maximale. Comme cela apparaît sur cette image, les classificateurs de mouvement local de ligne ont été corrigés au voisinage des zones S1 et S2.

Les images représentées sur la figure 19, la figure 20, et la figure 21 ont été obtenues lors d'un cinquième essai.

La figure 19 est une image vidéo en nuances de gris d'une scène acquise par le capteur d'images 12. Les éléments de la scène sont immobiles et le capteur d'images 12 est mobile par rapport à la scène.

La figure 20 représente l'image différentielle Idiff de la figure 19 sur laquelle sont en outre représentées les zones D de pixels de bords d'intérêt pour lesquels le classificateur de mouvement local de ligne indique un mouvement vers la droite, les zones G de pixels de bords d'intérêt pour lesquels le classificateur de mouvement local de ligne indique un mouvement vers la gauche, et les zones I de pixels de bords d'intérêt pour lesquels le classificateur de mouvement local de ligne indique une indétermination. L'indicateur de mouvement vers la gauche est égal à 135 et l'indicateur de mouvement vers la droite est égal à 318.

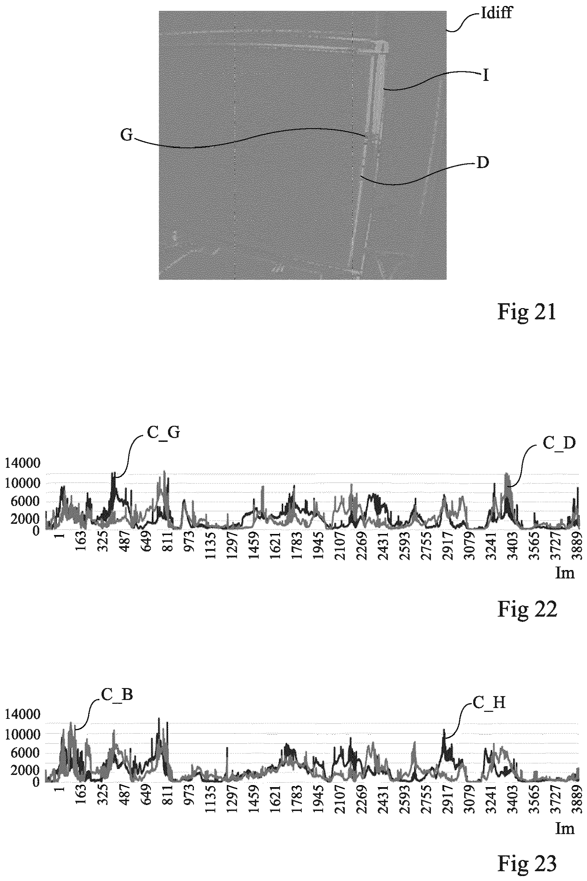

La figure 21 est une figure analogue à la figure 20 obtenue après la mise en oeuvre de la correction décrite précédemment consistant à augmenter le seuil de nombre de pixel TH_NB utilisé à l'étape 22. L'indicateur de mouvement vers la gauche après correction est égal à 603 et l'indicateur de mouvement vers la droite après correction est égal à 1589.

La figure 22 représente, en fonction du rang d'images vidéo acquises par le capteur d'images 12 pour une séquence d'images une courbe C_G d'évolution de l'indicateur de mouvement vers la gauche et une courbe C_D d'évolution de l'indicateur de mouvement vers la droite. Dans cette séquence d'images, le capteur d'images 12 est déplacée par rapport à un bureau et fait l'acquisition d'images dans un environnement très proche, comme pour les images des figures 9, 12, et 16

La figure 23 représente, en fonction du rang d'images vidéo acquises par le capteur d'images 12 pour la même séquence d'images que la figure 22, une courbe C_H d'évolution de l'indicateur de mouvement vers le haut et une courbe C_B d'évolution de l'indicateur de mouvement vers le bas.

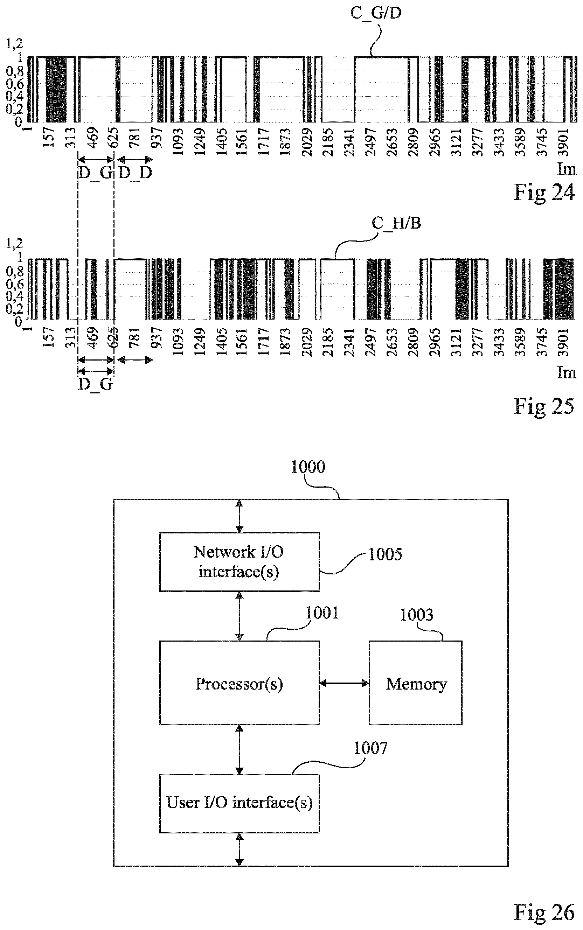

La figure 24 représente, en fonction du rang d'images vidéo Im acquises par le capteur d'images 12 pour la même séquence d'images que la figure 22, une courbe C_G/D d'évolution du classificateur global de mouvement de ligne. En figure 24, le classificateur global de mouvement de ligne est un signal binaire qui est à "1" lorsque le classificateur global de mouvement de ligne indique un mouvement global vers la gauche et qui est à "0" lorsque le classificateur global de mouvement de ligne indique un mouvement global vers la droite.

La figure 25 représente, en fonction du rang d'images vidéo acquises par le capteur d'images 12 pour la même séquence d'images que la figure 22, une courbe C_H/B d'évolution du classificateur global de mouvement de colonne. En figure 25, le classificateur global de mouvement de colonne est un signal binaire qui est à "1" lorsque le classificateur global de mouvement de colonne indique un mouvement global vers le haut et qui est à "0" lorsque le classificateur global de mouvement de colonne indique un mouvement global vers le bas.

Une analyse des courbes C_G/D et C_H/B donne des indications sur le mouvement du capteur d'images 12 par rapport à la scène. A titre d'exemple, une phase D_G sur la figure 24 pendant laquelle le classificateur global de mouvement de colonne reste à "1" pour plusieurs images vidéo indique un mouvement global prolongé vers la gauche et une phase D_D sur la figure 24 pendant laquelle le classificateur global de mouvement de colonne reste à "1" pour plusieurs images vidéo indique un mouvement global prolongé vers la droite. En outre, comme la courbe C_H/B alterne à plusieurs reprises entre les valeurs "0" et "1" pendant la phase D_G, cela signifie que le capteur d'images 12 reste sensiblement horizontal pendant cette phase.

Dans des modes de réalisation décrits précédemment, des étapes de procédé peuvent être effectuées en utilisant un ou plusieurs dispositifs de calcul. Les modes de réalisation ne sont pas limités à un fonctionnement avec un type particulier de dispositif de calcul.

La figure 26 est un schéma-bloc d'un dispositif de calcul 1000 qui peut être utilisé pour réaliser le module de détection 12 et/ou le module de commande d'affichage 10. Le dispositif de calcul 1000 peut comprendre un ou plusieurs processeurs 1001 (Processor(s)) et un ou plusieurs supports de stockage non transitoire lisibles par ordinateur (par exemple, la mémoire 1003 (Memory)). La mémoire 1003 peut stocker, dans un moyen de stockage non transitoire lisible par ordinateur, des instructions de programme informatique qui, lorsqu'elles sont exécutées, mettent en oeuvre les étapes du procédé de détection décrit ci-dessus. Le processeur ou les processeurs 1001 peuvent être couplés à la mémoire 1003 et peuvent exécuter ces instructions de programme d'ordinateur pour entraîner la réalisation de ces étapes.

Le dispositif de calcul 1000 peut également comprendre une interface 1005 d'entrée/sortie de réseau (Network I/O Interface(s)) par laquelle le dispositif de calcul peut communiquer avec d'autres dispositifs de calcul (par exemple, sur un réseau), et peut également comprendre une ou plusieurs interfaces d'utilisateur 1007 (User I/O Interface(s)), par l'intermédiaire desquelles le dispositif de calcul peut fournir un signal de sortie à un utilisateur et recevoir un signal d'entrée provenant de l'utilisateur. Les interfaces d'utilisateur peuvent comprendre des périphériques tels qu'un clavier, une souris, un microphone, un périphérique d'affichage (p.ex. un moniteur ou un écran tactile), des haut-parleurs, une caméra, et/ou divers autres types de périphérique entrée/sortie.

Les modes de réalisation décrits ci-dessus peuvent être mis en oeuvre de plusieurs façons. A titre d'exemple, les modes de réalisation peuvent être mis en oeuvre à l'aide d'un circuit dédié, d'un logiciel ou d'une combinaison de ceux-ci. Lorsqu'ils sont mis en oeuvre par logiciel, le code logiciel peut être exécuté sur n'importe quel processeur approprié (par exemple, un microprocesseur) ou un ensemble de processeurs, qu'ils soient prévus dans un dispositif de calcul unique ou répartis entre plusieurs dispositifs de calcul. Il convient de noter que tout composant ou ensemble de composants qui réalisent les étapes de procédé décrites ci-dessus peuvent être considérés comme un ou plusieurs contrôleurs qui commandent les étapes décrites ci-dessus. Le contrôleur ou les contrôleurs peuvent être mis en oeuvre de nombreuses façons, par exemple avec un circuit électronique dédié ou avec un circuit à usage général (par exemple, un ou plusieurs processeurs) qui est programmé à l'aide un logiciel ou d'un microcode pour exécuter les étapes de procédé décrites ci-dessus.

À cet égard, il convient de noter qu'un mode de réalisation décrit ici comprend au moins un support de stockage lisible par ordinateur (RAM, ROM, EEPROM, mémoire flash ou une autre technologie de mémoire, CD-ROM, disque numérique polyvalent (DVD) ou un autre support à disque optique, cassette magnétique, bande magnétique, disque de stockage magnétique ou un autre dispositif de stockage magnétique, ou un autre support de stockage non transitoire lisible par ordinateur) codé avec un programme d'ordinateur (c'est-à-dire plusieurs instructions exécutables) qui, lorsqu'il est exécuté sur un processeur ou plusieurs processeurs, effectue les étapes des modes de réalisation décrits ci-dessus. Le support lisible par ordinateur peut être transportable de sorte que le programme stocké sur celui-ci peut être chargé sur n'importe quel dispositif de calcul pour mettre en oeuvre des aspects des techniques décrites ici. En outre, il convient de noter que la référence à un programme d'ordinateur qui, lorsqu'il est exécuté, effectue l'une des étapes de procédé décrites ci-dessus, ne se limite pas à un programme d'application s'exécutant sur un ordinateur hôte. Au contraire, les termes programme d'ordinateur et logiciel sont utilisés ici dans un sens général pour faire référence à tout type de code informatique (par exemple, un logiciel d'application, un micrologiciel, un microcode, ou toute autre forme d'instruction d'ordinateur) qui peut être utilisé pour programmer un ou plusieurs processeurs pour mettre en oeuvre des aspects des procédés décrits précédemment.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. Enfin, la mise en oeuvre pratique des modes de réalisation et variantes décrits est à la portée de la personne du métier à partir des indications fonctionnelles données ci-dessus.

## Revendications

1. Procédé de détermination d'au moins un classificateur de mouvement global selon une première direction dans des images vidéo d'une scène, comprenant les étapes suivantes :

    a) déterminer une image différentielle (Idiff) à partir de deux images vidéo (Im) ;
    b) sélectionner des pixels de l'image différentielle correspondant à des bords d'objets de la scène ;
    c) déterminer, pour chaque pixel sélectionné à l'étape b), au moins un classificateur de mouvement local selon la première direction au moins à une première valeur ou à une deuxième valeur ;
    d) déterminer un premier indicateur de mouvement local selon la première direction qui dépend de la somme des classificateurs de mouvement local selon la première direction à la première valeur et un deuxième indicateur de mouvement local selon la première direction qui dépend de la somme des classificateurs de mouvement local selon la première direction à la deuxième valeur ; et
    e) déterminer le classificateur de mouvement global selon la première direction à partir de la comparaison des premier et deuxième indicateurs de mouvement local selon la première direction.

2. Système de de détermination d'au moins un classificateur de mouvement global selon une première direction dans des images vidéo d'une scène, comprenant un capteur d'images (12) d'acquisition des images vidéo et un module de traitement (14) configuré pour :

    a) déterminer une image différentielle (Idiff) à partir de deux images vidéo (Im) ;
    b) sélectionner des pixels de l'image différentielle correspondant à des bords d'objets de la scène ;
    c) déterminer, pour chaque pixel sélectionné à l'étape b), au moins un classificateur de mouvement local selon la première direction au moins à une première valeur ou à une deuxième valeur ;
    d) déterminer un premier indicateur de mouvement local selon la première direction qui dépend de la somme des classificateurs de mouvement local selon la première direction à la première valeur et un deuxième indicateur de mouvement local selon la première direction qui dépend de la somme des classificateurs de mouvement local selon la première direction à la deuxième valeur ; et
    e) déterminer le classificateur de mouvement global selon la première direction à partir de la comparaison des premier et deuxième indicateurs de mouvement local selon la première direction.

3. Procédé ou système selon la revendication 1 ou 2, dans lequel, à l'étape a), chaque pixel de l'image différentielle (Idiff) est une fonction affine de la différence entre les pixels à la même position dans les deux images vidéo.

4. Procédé ou système selon l'une quelconque des revendications 1 à 3, dans lequel l'étape a) comprend, en outre, une étape de segmentation de l'image différentielle (Idiff) pour délimiter au moins deux portions (W1, W2) de l'image différentielle, les étapes b), c), d), et e) étant mises en oeuvre séparément pour chaque portion de l'image différentielle.

5. Procédé ou système selon l'une quelconque des revendications 1 à 4, dans lequel l'étape b) comprend une première sélection de pixels de l'image différentielle (Idiff) pour lesquels la valeur absolue de la différence entre le pixel et une constante est supérieure à un premier seuil de valeur de pixel.

6. Procédé ou système selon la revendication 5, dans lequel l'étape b) comprend une deuxième sélection de pixels de l'image différentielle (Idiff) parmi les pixels de la première sélection comprenant la sélection, pour chaque groupe de pixels jointifs selon la première direction, seulement du pixel au début du groupe et du pixel à la fin du groupe.

7. Procédé ou système selon la revendication 5 ou 6, dans lequel l'étape b) comprend le retrait de la première sélection de chaque groupe de pixels jointifs selon la première direction pour lequel le nombre de pixels est inférieur à un seuil de nombre de pixels.

8. Procédé ou système selon l'une quelconque des revendications 1 à 7, dans lequel l'étape c) comprend, pour chaque pixel de l'image différentielle (Idiff) sélectionné à l'étape b), la détermination du classificateur de mouvement local selon la première direction du pixel sélectionné au moins à la première valeur ou à la deuxième valeur à partir de la valeur du pixel sélectionné et du résultat de la comparaison entre un premier pixel égal au pixel de la première ou deuxième image vidéo situé selon la première direction juste avant le pixel sélectionné ou un premier niveau de bruit égal au niveau de bruit de pixels de l'image différentielle situés selon la première direction juste avant le pixel sélectionné et un deuxième pixel égal au pixel de la première ou deuxième image vidéo situé selon la première direction juste après le pixel sélectionné ou un deuxième niveau de bruit égal au niveau de bruit de pixels de l'image différentielle situés selon la première direction juste après le pixel sélectionné.

9. Procédé ou système selon la revendication 8, dans lequel, pour chaque pixel de l'image différentielle (Idiff) sélectionné à l'étape b), l'étape c) comprend :

- dans le cas où le pixel sélectionné est inférieur à un deuxième seuil de valeur de pixel et dans le cas où le premier pixel est inférieur strictement au deuxième pixel ou le premier niveau de bruit est inférieur strictement au deuxième niveau de bruit, le classificateur de mouvement local selon la première direction du pixel sélectionné est mis à la première valeur ;
- dans le cas où le pixel sélectionné est supérieur au deuxième seuil de valeur de pixel et dans le cas où le premier pixel est inférieur strictement au deuxième pixel ou le premier niveau de bruit est inférieur strictement au deuxième niveau de bruit, le classificateur de mouvement local selon la première direction du pixel sélectionné est mis à la deuxième valeur ;
- dans le cas où le pixel sélectionné est inférieur au deuxième seuil de valeur de pixel et dans le cas où le premier pixel est supérieur strictement au deuxième pixel ou le premier niveau de bruit est supérieur strictement au deuxième niveau de bruit, le classificateur de mouvement local selon la première direction du pixel sélectionné est mis à la deuxième valeur ; et
- dans le cas où le pixel sélectionné est supérieur au deuxième seuil de valeur de pixel et dans le cas où le premier pixel est supérieur strictement au deuxième pixel ou le premier niveau de bruit est supérieur strictement au deuxième niveau de bruit, le classificateur de mouvement local selon la première direction du pixel sélectionné est mis à la première valeur.

10. Procédé ou système selon la revendication 8 ou 9, dans lequel le premier niveau de bruit est égal à l'écart-type des valeurs d'un nombre K de pixels de l'image différentielle (Idiff) jointifs selon la première direction situés juste avant le pixel sélectionné et le deuxième niveau de bruit est égal à l'écart-type des valeurs d'un nombre K de pixels de l'image différentielle jointifs selon la première direction situés juste après le pixel sélectionné.

11. Procédé ou système selon l'une quelconque des revendications 8 à 10, dans lequel le premier niveau de bruit et/ou le deuxième niveau de bruit sont remplacés par une valeur maximale de niveau de bruit dans le cas où les K pixels sont supérieurs à un troisième seuil de valeur de pixel.

12. Procédé ou système selon l'une quelconque des revendications 1 à 11, comprenant en outre :

à l'étape c), déterminer, pour chaque pixel de l'image différentielle (Idiff) sélectionné à l'étape b), au moins un classificateur de mouvement local selon une deuxième direction, différente de la première direction, au moins à une troisième valeur ou à une quatrième valeur ;
à l'étape d), déterminer un premier indicateur de mouvement local selon la deuxième direction qui dépend de la somme des classificateurs de mouvement local selon la deuxième direction à la troisième valeur et un deuxième indicateur de mouvement local selon la deuxième direction qui dépend de la somme des classificateurs de mouvement local selon la deuxième direction à la quatrième valeur ; et
à l'étape e), déterminer un classificateur de mouvement global selon la deuxième direction à partir de la comparaison des premier et deuxième indicateurs de mouvement local selon la deuxième direction.

13. Procédé ou système selon la revendication 12, dans lequel, à l'étape d), pour chaque pixel de chaque groupe de pixels sélectionnés à l'étape b) et alignés selon une troisième direction inclinée à 10 ° prés selon l'une des bissectrices par rapport aux première et deuxième directions, lorsque le classificateur de mouvement local selon la première direction du pixel du groupe est à la première valeur et le classificateur de mouvement local selon la deuxième direction du pixel du groupe est à la quatrième valeur, le classificateur de mouvement local selon la première direction du pixel du groupe est pondéré par un facteur strictement inférieur à l'unité dans la détermination du premier indicateur de mouvement local selon la première direction et le classificateur de mouvement local selon la deuxième direction du pixel du groupe est pondéré par ledit facteur dans la détermination du premier indicateur de mouvement local selon la deuxième direction, et, lorsque le classificateur de mouvement local selon la première direction du pixel du groupe est à la deuxième valeur et le classificateur de mouvement local selon la deuxième direction du pixel du groupe est à la quatrième valeur, le classificateur de mouvement local selon la première direction du pixel est pondéré par ledit facteur dans la détermination du deuxième indicateur de mouvement local selon la première direction et le classificateur de mouvement local selon la deuxième direction du pixel du groupe est pondéré par ledit facteur dans la détermination du deuxième indicateur de mouvement local selon la deuxième direction.

14. Procédé ou système selon la revendication 12 ou 13, dans lequel les pixels des images vidéo (Im) et de l'image différentielle (Idiff) sont agences en rangées et en colonnes, la première direction correspondant à la direction des rangées et la deuxième direction correspondant à la direction des colonnes.

15. Procédé ou système selon l'une quelconque des revendications 1 à 14, comprenant un dispositif d'illumination (16) de la scène par un rayonnement, le capteur d'images (12) étant configuré pour acquérir des images vidéo (Im) de la scène en captant ledit rayonnement.

Fig 1

Fig 2

Im

F1        F2

Fig 3

Idiff

Fig 4

Idiff

W1        W2

Fig 5

22_1

22_2

Fig 6

G          D

Idiff

I

Fig 7

Idiff

D          G

Fig 8

Fig 9

Fig 10

Fig 11

Fig 12

Fig 13

Fig 14

Fig 15

Fig 16

Fig 17

Fig 18

Fig 19

Fig 20

EP 4 386 672 A1

Fig 21

Fig 22

Fig 23

24

Fig 24

Fig 25

Fig 26

Europäisches
Patentamt

European
Patent Office

Office européen
des brevets

# RAPPORT DE RECHERCHE EUROPEENNE

Numéro de la demande

EP 23 21 3874

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | TAO SICHEN ET AL: "A Novel Artificial Visual System for Motion Direction Detection in Grayscale Images", MATHEMATICS, vol. 10, no. 16, 1 août 2022 (2022-08-01), page 2975, XP093055291, ISSN: 2227-7390, DOI: 10.3390/math10162975 | 1-5,7, 12,14,15 | INV. G06T7/254 |
| A | * abrégé * <br> * figures 4,6,7 * <br> * sections 2.3, 2.4 * <br> ----- | 6,8-11, 13 | |
| A | BIRGIOLAS JUSTAS ET AL: "SwarmSight: Measuring the temporal progression of animal group activity levels from natural-scene and laboratory videos", BEHAVIOR RESEARCH METHODS, SPRINGER US, NEW YORK, vol. 49, no. 2, 29 avril 2016 (2016-04-29), pages 576-587, XP036220934, DOI: 10.3758/S13428-016-0732-2 * page 578 * <br> ----- | 1-15 | |
| | | | DOMAINES TECHNIQUES RECHERCHES (IPC) |
| A | DAVIS AND G BRADSKI J: "Real-time Motion Template Gradients using Intel CVLib", PROCEEDINGS ON THE INTERNATIONAL CONFERENCE ON COMPUTERVISION, XX, XX, 1 septembre 1999 (1999-09-01), pages 1-20, XP002331182, * le document en entier * <br> ----- | 1-15 | G06T |

Le présent rapport a été établi pour toutes les revendications

| Lieu de la recherche | Date d'achèvement de la recherche | Examinateur |
|---|---|---|
| Munich | 8 avril 2024 | Eveno, Nicolas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2213216